# EUROPEAN PATENT APPLICATION

(11) **EP 1 364 763 A1**
(43) Date of publication of application: **26.11.2003**
(21) Application number: 02711226.7
(22) Date of filing: 25.01.2002
(51) Int. Cl.: B29C 39/10, B29L 11/00

(54) **METHOD OF MANUFACTURING ARTICLE WITH SPECIFIED SURFACE SHAPE**

(30) Priority: 01.02.2001 JP 2001025704
(71) Applicant: Nippon Sheet Glass Co., Ltd., Osaka-shi, Osaka 541-0041 (JP)
(72) Inventor: HORI, Masahiro, Nippon Sheet Glass Co., Ltd., Osaka-shi, Osaka 541-0041 (JP); NAKAMURA, Koichiro, Nippon Sheet Glass Co., Ltd., Osaka-shi, Osaka 541-0041 (JP); YAMAMOTO, Hiroaki, Nippon Sheet Glass Co., Ltd., Osaka-shi, Osaka 541-0041 (JP)
(74) Representative: Cresswell, Thomas Anthony
(86) International application number: JP0200561
(87) International publication number: WO02060666

(57) **Abstract**

A process for producing a coated article which has excellent releasability and a surface pattern having a high degree of accuracy efficiently. The process is a process for producing an article having a given surface pattern, which comprises holding a mold horizontally with its surface facing up, feeding a sol-gel material solution onto the surface to form a film, heating them, bringing a substrate into contact with the film, heating them, removing the mold, and further heating the film and the substrate as required to obtain the article having a gelled film whose surface pattern is the inverse of a surface pattern of the mold coated on a surface of the substrate, wherein sol-gel material solution film edge holding zone is provided along the perimeter of the surface of the mold at a lower position than the surface of the mold, and the sol-gel material solution is fed such that the edges of the formed film of the sol-gel material solution reach the zone beyond the perimeter of the surface of the mold.

## Description

### Technical Field

The present invention relates to a process for producing an article having a given surface pattern. More specifically, it relates to a process for producing an article having a given pattern of fine pits and projections on a surface of a substrate, such as a micro-optical device and a substrate for a data recording medium.

### Prior Art

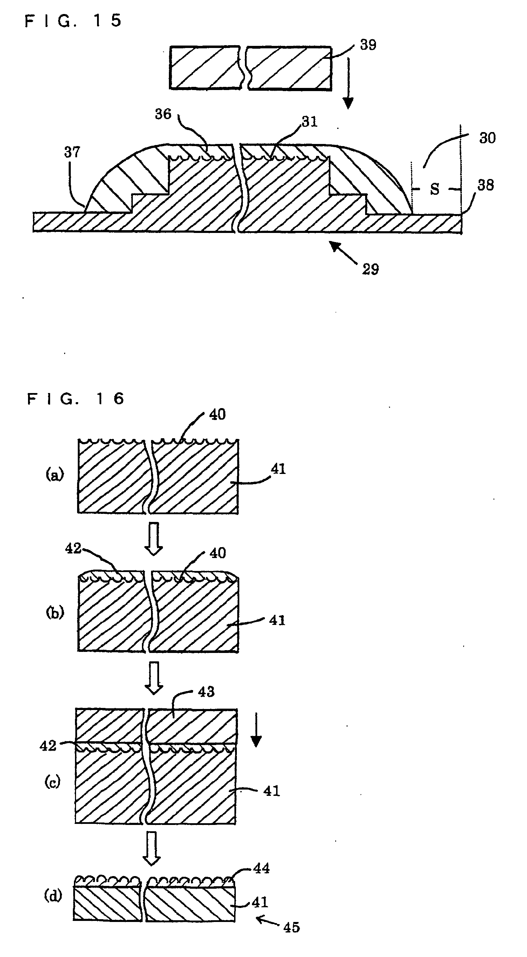

It is known that optics such as a CD-ROM, other data recording media, a planar microlens array (array of microlenses arranged on a substrate in a parallel or staggered arrangement), a Fresnel lens, a diffraction grating element and an optical waveguide element are produced by a sol-gel process. JP-A 11-314927 discloses a process for producing an article having an uneven surface by placing a film of a sol-gel material between a substrate and a mold so as to make intimate contact with the substrate and the mold and then heating them to produce the article having a gelled film whose surface pattern is the inverse of a surface pattern of the mold coated on a surface of the substrate. For example, as shown in Fig. 16(a) in the same publication, a mold 41 with a mold surface 40 which has a given surface pattern and is nearly flat as a whole is held horizontally with the mold surface 40 facing up. Then, as shown in Fig. 16(b), a sol-gel material solution is poured onto the mold surface 40 to form a film 42 and then heated. Then, as shown in Fig. 16(c), a substrate 43 is brought into contact with the film 42, and they are further heated. Thereafter, the mold 41 is removed, and the film 42 and the substrate 43 are further heated as required, thereby obtaining, as shown in Fig. 16(d), an article 45 with a given surface pattern which has a gelled film 44 whose surface pattern is the inverse of a surface pattern of the mold coated on a surface of the substrate 41.

However, in the above prior art, portions of the gelled film, particularly those along the perimeter of the mold often stick to and remain on the removed mold, thereby preventing sufficient releasability and transferability from being attained. This is also one of causes of defects in the molded article, a decrease in dimensional accuracy of the molded article and a decrease in a useful life of the mold. Further, with respect to the sol-gel process, a further speedup in a production process, a further decrease in the percentage of defective molded articles and a further improvement in dimensional accuracy are desired.

### Disclosure of the Invention

The present invention has been conceived to solve the above problems. An object of the present invention is to provide a process for producing a coated article which has excellent releasability and a surface pattern having a high degree of accuracy efficiently.

Other objects and advantages of the present invention will be apparent from the following description.

According to the present invention, the above object and advantage of the present invention are achieved by a process for producing an article having a given surface pattern, the process comprising holding a mold horizontally with its mold surface facing up, feeding a sol-gel material solution onto the mold surface to form a film, heating them, bringing a substrate into contact with the film, heating them, removing the mold, and further heating the film and the substrate as required to obtain the article having a gelled film whose surface pattern is the inverse of a surface pattern of the mold surface of the mold coated on a surface of the substrate, wherein zone for holding edges of the film of the sol-gel material solution is provided along the perimeter of the mold surface of the mold at a lower position than the mold surface of the mold, and the sol-gel material solution is fed onto the mold surface of the mold such that the edges of the film of the sol-gel material solution reach the film edge holding zone beyond the perimeter of the mold surface of the mold.

### Brief Description of the Drawings

Fig. 1 is a cross-sectional diagram showing an example of a mold to be used in the present invention.
Fig. 2 is a plan view of the mold of Fig. 1.
Fig. 3 is a partial side view of another example of the mold to be used in the present invention.
Fig. 4 is a partial side view of another example of the mold to be used in the present invention.
Fig. 5 is a partial side view of another example of the mold to be used in the present invention.
Fig. 6 is a partial side view of another example of the mold to be used in the present invention.
Fig. 7 is a partial side view of another example of the mold to be used in the present invention.
Fig. 8 is a partial side view of another example of the mold to be used in the present invention.
Fig. 9 shows a cross-sectional view of the mold of Fig. 8 and a diagram for illustrating a production process using the mold.
Fig. 10 shows a partial cross-sectional view of a mold of comparative example and a diagram for illustrating a production process using the mold.
Fig. 11 shows a partial cross-sectional view of a mold of another comparative example and a diagram for illustrating a production process using the mold.
Fig. 12 is a partial side view of another example of the mold to be used in the present invention.
Fig. 13 shows a cross-sectional view of the mold of Fig. 12 and a diagram for illustrating a production process using the mold.
Fig. 14 is a partial side view of another example of the mold to be used in the present invention.
Fig. 15 shows a cross-sectional view of the mold of Fig. 14 and a diagram for illustrating a production process using the mold.
Fig. 16 is a diagram for illustrating a production process according to prior art.

### Preferred Embodiment of the Invention

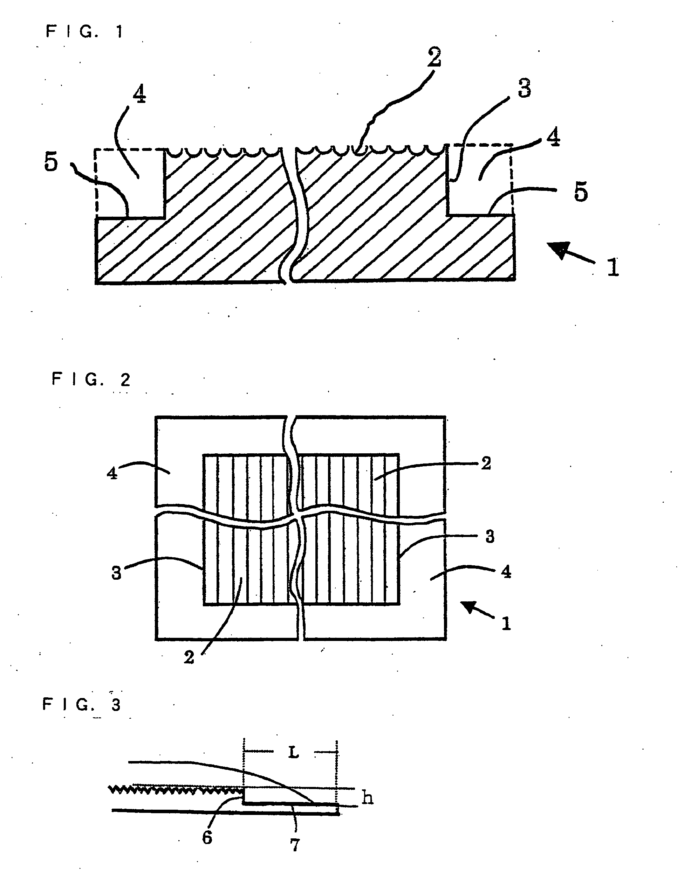

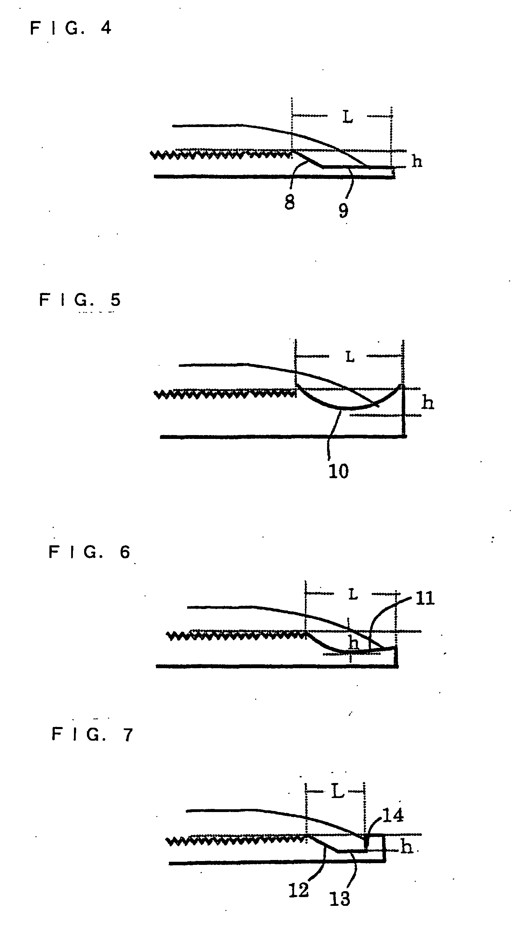

Zone for holding edges of a film of a sol-gel material solution (hereinafter simply referred to as "film edge holding zone") in the present invention will be described with reference to the drawings hereinafter. As shown in Fig. 1 which shows a vertical cross section and Fig. 2 which shows a plan view, a molding surface (hereinafter referred to as "mold surface") 2 of a mold 1 has a given uneven surface pattern and is almost flat as a whole, and film edge holding zone 4 is provided along a perimeter 3 of the mold surface 2 such that it surrounds the mold surface. A bottom 5 of the film edge holding zone 4 must be lower than the mold surface 2 of the mold. Illustrative examples of the shape, in terms of cross section, of the film edge holding zone include one formed by a vertical wall 6 and a horizontal bottom 7 as shown in Fig. 3, one formed by an inclined wall 8 and a horizontal bottom 9 as shown in Fig. 4, one formed by an arc-shaped hollow 10 as shown in Fig. 5, one formed by a curve 11 as shown in Fig. 6, and one formed by an inclined wall 12, a horizontal wall 13 and a weir 14 as shown in Fig. 7.

When a sol-gel solution is poured onto the mold without the film edge holding zone of the present invention so as to coat the mold surface with a film, a peripheral portion of a surface of the film becomes lower than a central portion of the surface of the film due to surface tension, so that a film thickness in the peripheral portion of the film is smaller than that in the central portion of the film. The difference in the film thicknesses is larger than depths (generally 10 to 500 µm) of pits in the uneven mold surface of the mold. To heat the film, the mold and the film coating the mold are placed on heating means such as a hot plate. Without the preheating, when the film is further heated after a substrate is disposed thereon, such problems occur that a film thickness sufficient to cover the pits on the surface of the uneven mold cannot be obtained and that bubbles remain in the film. When the film is heated, water and a solvent are evaporated from the inside of the film. However, due to the difference in the film thicknesses, the concentrations of water and a solvent remaining in the peripheral portion of the film are lower than those of water and a solvent remaining in the central portion of the film, so that the peripheral portion of the film is cured faster than the central portion of the film. For this reason, a uniform cured film is not obtained easily, thereby resulting in unsatisfactory removal of the mold, inaccurate transfer of the surface pattern of the mold onto a product and a decrease in a useful life of the mold. In the present invention, in the above film edge holding zone; a solution in this zone communicates with a solution on the periphery of the mold. A film thickness in this zone is larger than a film thickness on the periphery of the mold, and with the film thickness in this zone, evaporation of water and a solvent is relatively little. Thus, due to the above communication of the solutions, the above concentrations in the film on the periphery are higher than those when the film edge holding zone is not provided. Consequently, the above differences in the concentrations between the central portion and peripheral portion of the solution film do not occur, so that the peripheral portion of the film is not cured faster than the central portion of the film and a molded film portion is cured uniformly. Meanwhile, when a depth of the edge holding zone is too much larger than a difference in film thickness between the central portion and peripheral portion of the film in case of using a conventional mold, the peripheral portion of the film is not cured easily, thereby making it impossible to cure the film uniformly. In the present invention, for example, when the film edge holding zone has a wall having a shape of a bank or weir along its perimeter as shown in Fig. 7, an increase in an area of the surface of the mold can be minimized so as to cure the film uniformly across the surface of the mold, whereby occurrences of unsatisfactory removal of the mold and unsatisfactory transfer of the surface pattern of the mold can be suppressed to an extreme. A shape and depth of the film edge holding zone are preferably designed in consideration of depths of pits on the mold surface of the mold and the amount of solution in a portion to be molded so as to cure the film uniformly across the surface of the mold. A depth (h) and width (L) of the above film edge holding zone are shown in Figs. 3 to 7. The depth (h) is defined as a distance from an average depth of the pits in the mold surface of the mold to the bottom of the film edge holding zone. The depth (h) of the film edge holding zone is sufficiently greater than depths (generally 50 to 500 µm) of the pits in the mold surface of the mold; that is, it must be as deep as at least 1.0 mm. However, when the depth is too great, the amount of a sol-gel material solution to be used increases, thereby causing an increase in production costs. Therefore, the depth is preferably not greater than 5 mm. The same effect is expected to be obtained even when the mold was rimmed. However, the thickness of the film depends on the thickness of the rim. Because of such reasons that the thickness of the rim cannot be changed freely, that the mold cannot be rimmed easily for certain reasons pertaining to production of the mold and that removal of the mold becomes difficult, the perimeter is desirably hollowed out.

Further, a width (L) of the film edge holding zone of not smaller than 1 mm is sufficient. However, to prevent a sol-gel material solution poured onto the mold from flowing out of the mold at the time of pressing, or to apply a water-repellant agent or form a weir, the width is preferably 3 to 7 mm and the depth is preferably 1 to 3 mm. In a case where no water-repellant agent is applied, the film edge holding zone preferably has a width of 2 to 5 mm and a depth of 2 to 5 mm. When the width is too large, the size of the mold becomes too large, thereby increasing costs of a mold substrate and a solution to be molded. Therefore, the width is preferably not larger than 10 mm.

As a mold to be used in the present invention, a mold base having a mold releasing film coated thereon is preferably used. Further, a foundation layer and a protective layer may be formed between the mold base and the mold releasing film. As a material of the mold base, one having an expansion coefficient close to that of the mold releasing film is preferably selected. A mold base made of a resin has advantages that fine fabrication can be easily made thereon and that it can be molded into a desired form easily, while a mold base made of glass or metal has high heat resistance and mechanical strength and excellent durability.

The mold in the present invention has pits or projections on its surface (mold surface). Illustrative examples of the pits and projections include spherical ones, conical ones, pyramidal ones, and slits having an arbitrary cross section. As for the spherical, conical and pyramidal ones, an arbitrary number of the spherical, conical or pyramidal ones are formed on a partial or whole surface of a mold releasing film. Meanwhile, when slits are formed as the pits, an arbitrary number of linear or curved slits may be formed, and when a plurality of such slits are formed, they may be formed concentrically or in a grid pattern.

To prepare the above mold base, for example, a surface of a flat glass substrate is subjected to precise etching so as to form, for example, a concave mold having a target shape. Further, by use of the concave mold as a master, a convex metal matrix can be prepared by electroless and electrolytic plating. In addition, by use of the above concave mold as a matrix, a convex metal master can be prepared by the above plating, and by use of the master, a concave metal matrix can be prepared by the above plating. These convex and concave matrices can be used as the mold base in the present invention. In the above plating, metal such as nickel or chromium is preferably used. Further, by use of the master prepared by the above method, a resin matrix can be prepared from an ultraviolet curable resin by a 2P molding process and used as the mold base in the present invention.

At least a surface of the mold base is preferably made of at least one material selected from the group consisting of titanium (Ti), aluminum (Al), silicon (Si) and oxides thereof. Further, the surface of the mold base is preferably coated with an adhesion reinforcing layer composed of at least one metal selected from the group consisting of platinum (Pt), copper (Cu), palladium (Pd) and silver (Ag), and a mold releasing layer composed of gold (Au) is preferably coated on the adhesion reinforcing layer.

An article produced by the present invention and having a given surface pattern has on its surface a gelled film whose surface pattern is the inverse of a surface pattern of the above mold. Thus, by creating a desired surface pattern on the mold surface of the mold, an article having a given surface pattern as exemplified by various optics such as a read-only optical data recording medium (CD-ROM) having high dimensional accuracy, a planar microlens array and a grating element can be produced.

In the production process of the present invention, as a raw material of the sol-gel material, for example, dialkyldialkoxysilane, alkyltrialkoxysilane, trialkoxysilane containing an aryl or substituted aryl group, dialkoxysilane containing two aryl or substituted aryl groups, trihalogenated silane containing an aryl or substituted aryl group, dihalogenated silane containing two aryl or substituted aryl groups, fluorine-containing alkyltrialkoxysilane, tetraalkoxysilane, tetraalkoxy titanium, tetraalkoxy zirconium, trialkoxy aluminum, tetrahalogenated silane, tetrahalogenated titanium, tetrahalogenated zirconium and trihalogenated aluminum are used.

An example of preferable combinations of these is a raw material for the sol-gel material which contains 0 to 95 mol% of a silane compound (A) represented by the following formula (1):

R¹ₘSiX₄₋ₘ (1)

wherein R¹ is an alkyl group, X is an alkoxyl group or a halogen atom, and m is 1 or 2,
0 to 95 mol% of a silane compound (B) represented by the following formula (2):

R²SiY₃ (2)

wherein R² is an aryl group or a substituted aryl group, and Y is an alkoxyl group or a halogen atom,
a total of the compound (A) and the compound (B) being 30 to 100 mol% (preferably 30 to 95 mol%), and
0 to 70 mol% (preferably 5 to 70 mol%) of a silane compound (C) represented by the following formula (3):

R³SiZ₃ (3)

wherein R³ is a fluorine-containing alkyl group, and Z is an alkoxyl group or a halogen atom. The sol-gel material will be described in detail hereinafter.

To prepare the raw material of the sol-gel material in the present invention, an alcohol is added as a solvent to a mixed solution comprising at least either one of the component (A) and the component (B) and the component (C). As the alcohol to be added, a lower alcohol having 1 to 4 carbon atoms, particularly methanol or ethanol having a low boiling point, is suitably used. The reason is because such alcohols can be removed from the solution quickly through relatively low temperature heat treatment after hydrolysis. The amount of the alcohol to be added is preferably 0.3 to 3 times, more preferably 0.5 to 1.5 times as large as a total of the components (A), (B) and (C) in terms of molar ratio.

To the raw material of the sol-gel material, a catalyst for hydrolyzing the components (A), (B) and (C) is added. As the catalyst, an acid catalyst is preferably used. As the acid catalyst, at least one acid catalyst selected from the group consisting of, for example, formic acid, acetic acid, tetrafluoroacetic acid, propionic acid, oxalic acid, hydrochloric acid, nitric acid and sulfuric acid is preferably used in the form of an aqueous solution. The amount of the acid catalyst to be added varies depending on the type of the acid and its strength as a proton acid (strong acid or weak acid). When the amount is too small, a hydrolysis and dehydrating condensation reaction proceed slowly, while the amount is too large, the condensation reaction proceeds excessively, thereby resulting in an excessively large molecular weight which causes frequent gelation of a precipitate or a coating solution disadvantageously. To facilitate causing the above film-forming solution to contain unhydrolyzed portions of the above silane compounds (A), (B) and (C) in amounts of 0.5 to 40% and 0.5 to 60%, respectively, based on the contents of the above silane compounds (A), (B) and (C) in the above material solution, an organic acid which is a weak acid is preferably selected from these acid catalysts and used. Among organic acids, formic acid in particular is preferably used because it has a small molecular weight and is evaporated easily. For example, when formic acid is used as the acid catalyst to be added, the amount of the acid catalyst, when a total of the components (A), (B) and (C) is 1 mole, is preferably 0.5 to 5 millimoles, more preferably 0.7 to 2 millimoles, in terms of molar ratio.

Further, water is preferably added at least in an amount that corresponds to a stoichiometric ratio required for hydrolysis of the silane compounds. This is because when the amount of water to be added is smaller than the stoichiometric ratio, unreacted silane compounds (A), (B) and (C) are liable to evaporate at the time of heat treatment for gelation. In general, the amount of water to be added, including water contained in a catalyst solution, is 1.1 to 30 mole times as large as the required stoichiometric ratio and is preferably 2 to 20 mole times, more preferably 3 to 10 mole times as large as a total of the components (A), (B) and (C). When an article produced by the present invention such as an optic is used in the proximity of memories or other electronic circuits, useful lives of these electronic circuits may be shortened when chlorine is contained in the optic. Therefore, an acid catalyst containing no chlorine is preferably used as the above acid catalyst.

In the present invention, a solution comprising at least either one of the components (A) and (B), the component (C), an alcohol solvent, water and a catalyst as the raw material of the sol-gel material is retained at, for example, room temperature for 90 to 120 minutes under agitation so as to hydrolyze alkoxysilanes. Thereby, the sol-gel material is prepared. Thereafter, the sol-gel material is preferably further retained at room temperature to 140°C, more preferably 70 to 100° C, for 6 to 30 hours so as to allow a dehydration and polycondensation reaction to proceed and to cause the solvent, water and an alcohol and water resulting from the dehydration and polycondensation reaction to evaporate from the solution. As a result, the weight and volume of the solution are reduced to, for example, 25 to 35% by weight or volume of its original weight and volume at the time of its preparation. Thereby, shrinkage in a formed film can be minimized so as to prevent the film from being cracked, and a cured film can be formed without having bubbles in the film at the time of final heat treatment. When the dehydration and polycondensation reaction proceeds excessively, the viscosity of the solution becomes too high, thereby making it difficult to coat the solution on the surface of the mold or substrate. On the other hand, when the dehydration and polycondensation reaction does not proceed sufficiently, occurrence of bubbles in the film at the time of the final heat treatment cannot be prevented. A retention temperature and a retention time which make the viscosity of the solution 10³ poises or lower are preferably selected so as to adjust the degree of proceeding of the dehydration and polycondensation reaction.

Using the above sol-gel material, an article such as an optic which is coated with a gelled film having a given surface pattern is molded in the following manner. More specifically, a liquid sol-gel material having a viscosity of not higher than 10³ poises is poured onto a mold having a pattern comprising fine pits and projections on its mold surface which is nearly flat as a whole, with the mold surface held horizontally and facing upward. The sol-gel material solution is formed into a film covering the mold surface of the mold. The sol-gel material is poured such that edges of the film reach sol-gel material solution film edge holding zone. Instead of pouring the sol-gel material, a method such as one in which the mold held horizontally is immersed in a sol-gel material bath and pulled out of the bath or one in which the sol-gel material solution is applied on the surface of the mold which is held horizontally with a brush may be used. In that state, until the viscosity of the sol-gel material covering the surface of the mold becomes preferably 10⁴ to 10⁸ poises, the mold is kept, for example, at 100 to 180°C for 3 to 120 minutes to allow a dehydration and polycondensation reaction to proceed.

Then, a substrate is brought into intimate contact with the film on the mold. In that state, the mold is further kept, for example, at 140 to 250° C for 10 to 120 minutes to allow the sol-gel material to almost complete the dehydration and polycondensation reaction and gel. Subsequently, the mold is removed, thereby forming a polysiloxane film which is a soft gelled film having an uneven surface pattern which is the inverse of the uneven pattern of the mold in such a state that the film is bonded to a surface of the substrate. If the mold is removed too early, the polysiloxane film is still so soft that its uneven surface pattern is deformed by its own weight. Hence, the above heat treatment is carried out to the extent that the deformation does not occur. After removal of the mold, a peripheral film portion in the sol-gel material solution film edge holding zone in the peripheral portion of the mold is cut and removed from the film bonded to the surface of the substrate with a knife.

Then, finally, the substrate having the film bonded thereon is heated, for example, at 180 to 380°C for 10 to 150 minutes so as to allow residual silanol groups in the polysiloxane film to polycondense and water produced by the polycondensation to evaporate. Thereby, the film slightly shrinks in volume in a thickness direction and becomes a compact film. Thus, an article such as an optic which is coated with the film having the surface pattern which is the inverse of the surface pattern of the mold is obtained.

Thus, according to the present invention, a polyorganosiloxane film having excellent heat resistance which enables the film to endure 350° C, a maximum thickness (film thickness measured at a projection on a surface) of, for example, 1 µm to 1 mm, preferably 20 to 150 µm, and a refractive index close to that of ordinary glass, e.g., 1.50 to 1.54, and having fine pits and projections formed along a principal surface or in a direction perpendicular to the principal surface, the pits and projections having, for example, a given width (pitch between pits or projections) of 1 to 500 µm and a given height of 5 to 500 µm, is formed on a flat substrate.

As the substrate used in the present invention, a flat substrate is preferably used. The substrate desirably has a degree of warpage (length of thermally deformed portion in a direction perpendicular to a surface of the substrate per unit length in a surface direction of the substrate) of the surface of the substrate at 200° C and 20° C of within ±5 µm per cm. When the degree of warpage exceeds the range, the film may come off the substrate on an interface therebetween or become cracked during molding of the film. Hence, it is preferred to select the material, size and shape of the substrate carefully.

Further, the substrate preferably has a linear expansion coefficient of not higher than 1.5 x 10⁻⁵/°C. This is because when the substrate has a linear expansion coefficient of higher than 1.5 x 10⁻⁵/°C and is a plastic substrate having a high thermal expansion coefficient such as a polypropylene (9 to 15 x 10⁻⁵/°C), the polyorganosiloxane film may come off the substrate on the interface or become cracked during molding of the film. Ordinary inorganic glass has a linear expansion coefficient of not higher than 1.5 x 10⁻⁵/°C. Further, at least a surface of the substrate is composed of an oxide. This is because when a surface of the substrate which makes contact with the polyorganosiloxane film is not composed of an oxide, bond strength lowers and, in some cases, the film may come off the substrate on the interface during molding of the film. Preferable examples of a material of the substrate include oxide glass such as silicate glass, boric acid-based glass or phosphoric acid-based glass, quartz, ceramics, silicon, metal, an epoxy resin and a glass fiber reinforced polystyrene. Although metal does not bond to the polyorganosiloxane film as it is, it can be used as a substrate once its surface is treated with an oxidizing agent.

Further, when a substrate which is transparent against light of desired wavelength, e.g., light in a visible region, an ultraviolet region or an infrared region, is used as the substrate in the present invention, an article having a given surface pattern in the present invention can exhibit a function as a transmission optic such as a lens, diffraction grating or prism. In addition, when a transparent body or an opaque body is used as the substrate, an article obtained by coating the polyorganosiloxane film with metal (such as aluminum or silver) or a dielectric film (such as magnesium fluoride or titanium oxide) is appropriately used as a reflective optic such as a reflective diffraction grating or Fresnel reflector, a CD-ROM or other date recording media.

Further, a surface of an article having a given surface pattern molded by use of a sol-gel material containing a functional group having relatively low reactivity such as a methyl group, ethyl group, isopropyl group, 3,3,3-trifluoropropyl group or phenyl group as the above sol-gel material shows good releasability against the sol-gel material. Therefore, the article having the given surface pattern does not require a mold releasing film made of gold or the like, can be used as a mold for the sol-gel material as it is, and can produce an article having a surface pattern which is the inverse of the surface pattern of the mold.

Hereinafter, an embodiment of the present invention will be described in detail with reference to the drawings.

The production process of the present invention is applied to (1) a variety of optical parts such as a read-only optical data recording medium (CD-ROM), a planar microlens array and a grating element.

A raw material of the mold (base) used in the present invention is one selected from the group consisting of, for example, a resin, a silicon wafer, glass, metal and mixtures thereof. To be more specific, an epoxy resin, a silicon wafer (Si), quartz glass, aluminum (Al), silver (Ag), chromium steel (SUS) , a copper (CU) alloy containing brass and a nickel (Ni) alloy which achieve an expansion coefficient close to those of the mold releasing film and the sol-gel material are employed.

A mold base made of a resin such as an epoxy resin can be formed more easily than a mold base made of glass or metal. On the other hand, a mold base made of glass or metal such as a silicon wafer (Si), quartz glass, aluminum (Al), silver (Ag), chromium steel (SUS), a copper (CU) alloy containing brass and a nickel (Ni) alloy exhibits better strength and heat resistance than a mold base made of a resin. When the mold is made of an epoxy resin, it preferably has a support such as glass or metal so as to endure heat and pressure involved in thermal molding of the sol-gel material.

The sol-gel material solution film edge holding zone provided around the perimeter of the mold surface of the mold at a position lower than the mold surface has shapes as shown in Figs. 3 to 7. When a solution having low viscosity is fed, a water-repellant agent is preferably applied to the bottom of the solution film edge holding zone or a weir having the same height as the mold surface of the mold is preferably provided as shown in Fig. 7 so as to prevent the solution from flowing out of the film edge holding zone. When the water-repellant agent is applied, a contact angle increases due to an effect of surface tension, so that the height of the peripheral hollowed portion may be small and the amount of a peripheral film portion remaining on the mold upon removal of the mold decreases. Further, the solution film edge holding zone exhibits better workability than a flat mold upon removal of the mold.

On the mold surface of the mold, a foundation layer composed of one material selected from the group consisting of titanium (Ti), aluminum (Al), silicon (Si) and oxides thereof, an adhesion reinforcing layer composed of at least one selected from the group consisting of platinum (Pt), copper (Cu), palladium (Pd) and silver (Ag), and a mold releasing layer composed of gold (Au) are formed in the order presented.

The sol-gel material may be one containing the above components (A), (B) and (C) or one containing at least either one of organo-mineral complexes represented by the following formulae (4) and (5):

RₙSiX'₄₋ₙ (4)

wherein R is a hydrocarbon group having 1 to 4 carbon atoms or a substituted or unsubstituted aryl group, X' is an alkoxyl group or a halogen atom, and n is an integer of 1 or 2,

MX"ₚ (5)

wherein M is a metal atom selected from Si, Ti, Zr and Al, X" is an alkoxyl group or a halogen atom, and p is an integer of 3 or 4.

Of such sol-gel materials, a silane-based sol-gel material is particularly preferred. The reason is that use of the silane-based sol-gel material has such an advantage that since hydrolysis and a polycondensation reaction of a raw material proceeds relatively slowly, it can be maintained at low viscosity required in press molding for a long time. Further, the raw material represented by the formula (4) which is effective in maintaining low viscosity and results from substitution of an organic chain has such advantages that it is common, that it is easy to obtain and that it is inexpensive.

Further, the sol-gel material in the present embodiment preferably contains a functional group which exhibits good releasability against other sol-gel materials after molded and cured. Specific examples of such a functional group include a methyl group, an ethyl group, an isopropyl group, a 3,3,3-trifluoropropyl group and a phenyl group which have relatively poor reactivity.

As described above, according to the present invention, since the sol-gel material solution film edge holding zone is provided around the perimeter of the mold, the film is cured uniformly, good releasability against the sol-gel material is achieved, and a mold having excellent durability can be obtained. In addition, as compared with prior arts, a speedup in a production process of an article having a given surface pattern can be achieved, a rate of occurrence of defects can be lowered, workability and dimensional accuracy can be improved, and the number of articles obtained from one mold can be increased.

Further, according to the mold, since it has grooves or other pits and projections on the mold surface, a variety of optical parts such as a read-only optical data recording medium (CD-ROM), a planar microlens array and a grating element can be produced by use of the mold.

### Examples

Molds were prototyped, and articles having given surface patterns were produced by use of these molds.

Then, evaluations of releasabilities and transferabilities of these molds and overall evaluations thereof were made and useful numbers of times of these molds were counted based on the following criteria.

To evaluate releasability, after a mold was pressed against a sol-gel material at a constant pressure for a predetermined time period, the mold was removed, and a percentage of an area of a sol-gel material film which was successfully removed from the mold was measured and evaluated on the following 1 to 4 scale, i.e., "ⓞ... 100% (very good), "○ ... not lower than 90% and lower than 100% (good), Δ ... not lower than 70% and lower than 90% (rather poor), × ... lower than 70% (poor)". Further, to evaluate transferability, diffraction efficiency of an obtained diffraction grating and variations in focal distances of an obtained microlenses were measured and evaluated on the following 1 to 4 scale, i.e., "ⓞ" ... diffraction efficiency: 60% or higher, variations in focal distances: 10% or lower (very good) , "○ ... diffraction efficiency: not lower than 50% and lower than 60%, variations in focal distances: higher than 10% and not higher than 25% (good), Δ ... diffraction efficiency: not lower than 30% and lower than 50%, variations in focal distances: higher than 25% and not higher than 50% (rather poor), × ... diffraction efficiency: lower than 30%, variations in focal distances: higher than 50% (poor)". A useful number of times of a mold indicates a maximum number of times the mold can be repeatedly used without a mold releasing film coming off the mold. Further, to make an overall evaluation of a mold, in addition to releasability and transferability, such factors as a degree of ease of formation of a mold releasing film and durability, corrosion resistance and heat resistance of the mold releasing film were considered, and the overall evaluation of the mold was made on the following 1 to 4 scale, i.e., "ⓞ" ... very good, "○ ... good, Δ ... rather poor, × ... poor".

As mold bases, first, second and third mold bases were prepared as described below.

### First Mold Base

About 1,000 linear V-shaped grooves (width of groove: 25 µm, depth of groove: 15 µm, cross section of groove: triangle, pitch between adjacent grooves (pitch measured between center lines of the grooves): about 25 µm) were formed on a surface of a silicon wafer by photoresist coating so as to prepare a silicon diffraction grating having an average thickness of 2.0 mm and a size of 25 mm x 25 mm. The silicon diffraction grating was used as a first mold base.

### Second Mold Base

A chromium (Cr) film (thickness: 1 µm) having high hydrofluoric acid resistance was formed all over a transparent quartz glass plate having a size of 2 mm x 38 mm x 38 mm by sputtering. In a central portion having a size of 36 mm x 36 mm of the metal film on one surface of the quartz glass plate, holes each having a diameter of about 1 µm were made at a pitch of 240 µm in longitudinal and transverse directions by a photoresist process. Thereafter, the quartz glass plate was immersed in a hydrofluoric acid solution for a predetermined time period so as to etch glass under the above holes, and the metal film was then removed. As a result, a quartz glass mold base having a total of about 22, 500 closely contacted, nearly hemispherical hollows, 150 hollows in a longitudinal direction and 150 hollows in a transverse direction, each of which has a radius of curvature of 120 µm, was obtained. This was used as a second mold base.

### Third Mold Base

A quartz glass substrate (coefficient of linear expansion: 5.5 x 10⁻⁷/°C) having a thickness of 3.0 mm and a size of 60 mm x 60 mm was subjected to ultrasonic alkaline cleaning and pure water cleaning. Then, as in the case of the second mold base, the substrate was wholly coated with a chromium film, holes were made by a photoresist process and etched, and the metal film was then removed to form a surface pattern comprising fine pits and projections in a central portion having a size of 50 mm x 50 mm on one surface of the quartz glass substrate. Thus, a quartz glass mold having a total of about 2,500 closely contacted, hemispherical hollows, 50 hollows in a longitudinal direction and 50 hollows in a transverse direction, each of which has a radius of curvature of 1,750 µm, a lens diameter of 1,000 µm and a depth of 73 µm, was obtained. This was used as a third mold base.

### Example 1

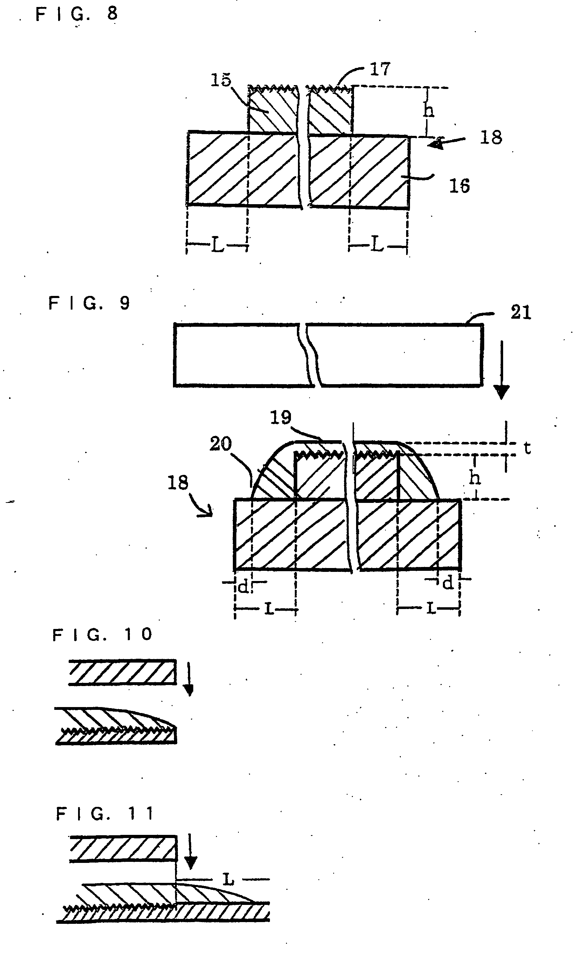

As shown in Fig. 8, a glass plate 16 having a size of 35 mm x 35 mm and a thickness of 5 mm was bonded to the back of a first mold base (silicon diffraction grating) 15 through anodic bonding such that four sides of the glass plate are stuck out for a distance (L) of 5 mm from four sides of a mold. Then, a titanium (Ti) film having a thickness of 80 nm was formed on a surface 17 of the mold base 15 as a foundation layer by vacuum evaporation. Subsequently, a platinum (Pt) film having a thickness of 170 nm was formed on the titanium film as a protective layer by vacuum evaporation. Then, the resulting mold base 15 was put in a vacuum sputtering machine so as to form a gold (Au) film having a thickness of 53 nm on the platinum layer as a mold releasing film by sputtering. Thereby, a mold 18 was obtained. The mold had a gold colored surface, and interference of fluorescent light reflected on the surface was seen. Thereby, solution film edge holding zone having a depth (h) of 2.0 mm and a width (L) of 5 mm was formed around the mold surface 15 of the mold. A mold releasing film was also formed at the bottom of the zone.

0.19 mol of phenyltriethoxysilane, 0.04 mol of dimethyldiethoxysilane and 0.04 mol of (3,3,3-trifluoropropyl)trimethoxysilane were charged into a beaker and stirred. Then, 0.25 mol of ethanol was added to the solution and stirred. Subsequently, a formic acid solution prepared by dissolving formic acid in 1.75 mol (31.5 g) of water to a content of 0.1% by weight was further added to the obtained solution and stirred for two hours. Although the mixture had two separate layers at the beginning of stirring, it became a transparent, homogenous solution after stirred for two hours. The solution was then heated in an oven at 80° C for 12 hours. Thereby, ethanol, the formic acid solution and water produced by a polycondensation reaction were evaporated. As a result, the solution which originally had a weight of about 103.3 g and a volume of about 100 cm³ became a solution having a weight of about 27 g and a volume of about 30 cm³, which corresponded to about 30% of its original weight and volume. The thus obtained solution was used as a sol-gel material solution.

As shown in Fig. 9, the mold 18 was held horizontally with the mold surface facing up. The sol-gel material solution (viscosity: not higher than 10³ poises) was poured onto the mold surface such that film edges 20 reached a distance (d) of 2 to 3 mm from the perimeter of the solution film edge holding zone beyond the perimeter of the surface of the mold. Thereby, a film 19 having a thickness (t) of about 60 µm was formed. In this state, the film was heated at 140°C for 7 minutes. By this heat treatment, a plastic-deformable gelled film (viscosity: 10⁴ to 10⁸ poises, film thickness: about 45 µm) was formed on the mold. Thereafter, a quartz glass substrate (coefficient of linear expansion: 1.0 x 10⁻⁵/°C) 21 having a thickness of 3.0 mm and a size of 40 mm x 40 mm was placed on the coated surface (gelled film), and they were heated at 200°C for 30 minutes with the substrate pressed against the coating film at a pressure of 2 kg/cm² so as to bond the coating film to the quartz glass substrate. Then, after the coating film was completely gelled, it was naturally air-cooled. Subsequently, the mold was removed from the quartz glass substrate. Thereafter, a peripheral film portion which had been present in the sol-gel material solution film edge holding zone around the perimeter of the mold was cut and separated from the film bonded to the surface of the substrate with a knife to be removed. The quartz glass substrate with the film bonded thereto was further heated at 350°C for 15 minutes. As a result, a diffraction grating having a film (average film thickness: 30 µm) bonded to the surface of the quartz glass substrate, the film having a surface pattern of the mold surface of the mold transferred thereon, was obtained. The above production process was repeated 30 times by use of the above mold so as to prepare 30 diffraction gratings.

The surface of the mold was examined under a microscope before and after its first use to check whether the mold releasing film came off the mold. As a result, the mold releasing film did not come off the mold at all. Further, in the above production process, removal of the mold from the sol-gel material could also be done easily and smoothly. In addition, the mold releasing film did not come off the mold at all even after the above production process was repeated 30 times, and releasability of the mold was not changed, either.

A gold (Au) reflective coating having a reflectivity of 60% (wavelength: 1,550 nm) was formed on the surface of the obtained diffraction grating by sputtering, and measurement of diffraction efficiency was then carried out. Laser light of 1,550 nm which was obtained from a tunable laser light source was entered into the diffraction grating so as to measure diffracted light intensity and the amount of light entered into the diffraction grating by use of a photodetector. They were compared with each other so as to evaluate diffraction efficiency.

As a result, it was understood that while diffraction efficiency of the mold with diffracted light of order 26 was 60% (1,550 nm), diffraction efficiency of the obtained diffraction grating with diffracted light of order 26 was also 60%, indicating that the surface pattern of the mold was transferred onto the diffraction grating with good reproducibility. The same result was obtained for the thirty diffraction gratings produced by repeating the production process.

Further, as a result of examining the mold under a microscope, the depth of a groove on the mold surface was 15 µm and a pitch between grooves on the mold surface was 25 µm. On the other hand, in the case of the obtained diffraction grating, the depth of a groove was 14.7 to 15.3 µm and a pitch between grooves was 24.2 to 25.1 µm. Thereby, it was understood that the surface pattern of the mold was transferred onto the diffraction grating with accurate reproducibility. The surface pattern of the mold was also transferred onto the thirty diffraction gratings produced by repeating the production process with accurate reproducibility. As for the results of evaluations of Example 1, releasability and transferability were evaluated as "ⓞ" , a useful number of times of the mold was 30 times or more, and its overall evaluation was "ⓞ".

### Comparative Example 1

Heating and press molding of a coating film, removal of a mold from the coating film and subsequent heating of the coating film were carried out in the same manner as in Example 1 as shown in Fig. 10 except that a mold obtained by coating a surface of a first mold base (silicon diffraction grating) with a foundation layer (titanium), a protective layer (platinum) and a mold releasing film (gold) in the same manner as in Example 1 without providing the first mold base with solution film edge holding zone was used and that a sol-gel material solution was poured onto the mold surface of the mold so as to form a film having a thickness of about 60 µm across the mold surface. The solution was flown off the mold base after press molding. While good releasability and transferability were retained in a central portion of the gelled film, a peripheral portion of the film stuck and remained on the mold. As a result, the area of a diffraction grating formed on a surface of a quartz glass substrate was only 70% or higher and lower than 90% of the area of a diffraction grating on the mold. Thereby, it was understood that the sol-gel film was not cured uniformly. As for the results of evaluations of Comparative Example 1, releasability was evaluated as "Δ", transferability was evaluated as "○" (diffraction efficiency: 55%), a useful number of times of the mold was 30 times or more, and its overall evaluation was "○".

### Comparative Example 2

Molding was carried out in the same manner as in Comparative Example 2 except that the perimeter of a mold was extended horizontally for a distance (L) of 5 mm, 10 mm or 15 mm as shown in Fig. 11. When the distance (L) was 5 mm, releasability was evaluated as "Δ", transferability was evaluated as "○" and an overall evaluation was "Δ" because a peripheral portion of a film was cured slowly and a molded portion was cured quickly. When the distance (L) was 10 mm, releasability was evaluated as "○", transferability was evaluated as "○" and an overall evaluation was "○". When the distance (L) was set at 15 mm, a molded article whose overall evaluation was "ⓞ" could be obtained for the first time. However, the size of the mold became very large, and a required amount of a solution also became very large.

### Example 2

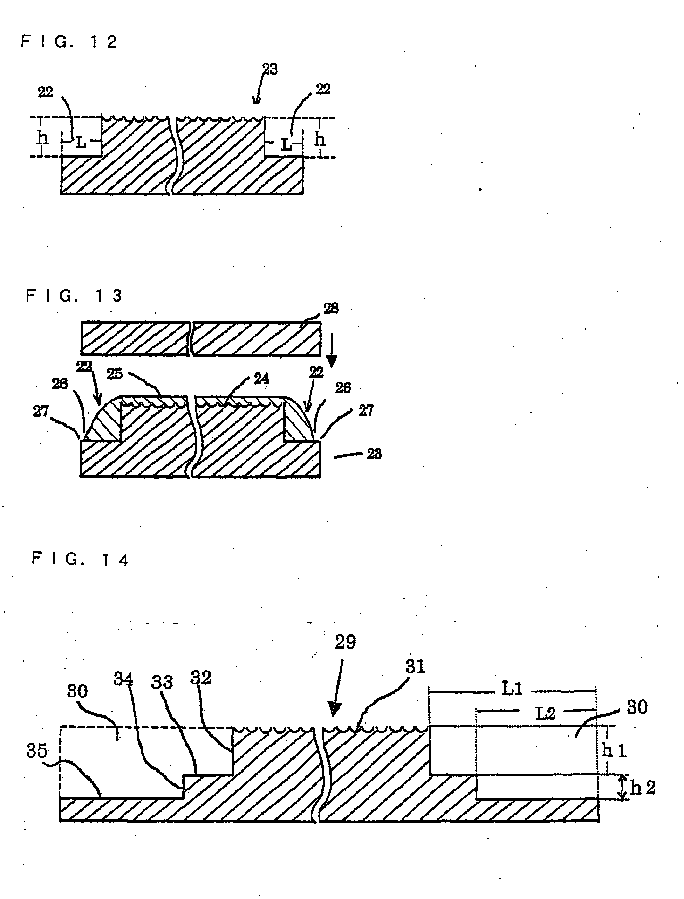

A peripheral portion of a second mold base was hollowed out to a depth (h) of 1 mm and a width (L) of 1 mm as shown in Fig. 12, and then a titanium foundation layer, a platinum protective layer and a gold mold releasing layer were formed on a surface of the mold base in the same manner as in Example 1 to obtain a mold 23 having solution film edge holding zone 22 around its perimeter.

A quartz glass plate (coefficient of linear expansion: 1.0 x 10⁻⁵/°C) having a thickness of 3.0 mm and a size of 38 mm x 38 mm was subjected to ultrasonic alkaline cleaning and pure water cleaning so as to be used as a substrate.

As shown in Fig. 13, a mold surface 24 of the mold 23 was held horizontally. The same sol-gel solution as used in Example 1 was poured onto the surface of the mold such that film edges 26 would reach a perimeter 27 of the solution film edge holding zone 22 beyond the perimeter of the surface of the mold. Thus, a layer 25 having a thickness of about 200 µm was formed. Then, they started to be heated at 160°C, and the heating temperature was gradually increased to 180°C in 20 minutes and then kept at the temperature for 40 minutes. By this heat treatment, a plastic-deformable gelled film (viscosity: 10⁴ to 10⁸ poises) was formed on the mold. Thereafter, the quartz glass plate 28 was disposed on the gelled film, and they were heated at 250°C for 20 minutes with the plate pressed against the gelled film at a pressing pressure of 2 kg/cm². Then, the mold was removed. Thereafter, a peripheral film portion which had been present in the sol-gel material solution film edge holding zone 22 around the perimeter of the mold was cut and separated from the film bonded to the surface of the substrate with a knife to be removed. As a result, a fine uneven plate having a film bonded to the surface of the quartz glass substrate, the film having a surface pattern of the mold surface of the mold transferred thereon, was obtained. The fine uneven plate obtained by removing the mold was heated at 350°C for 15 minutes. After the final heat treatment, a planar microlens array having a film thickness in a flat area of about 50 µm and a maximum film thickness from the apex of a semicircular convex lens to the bottom of the plate of 170 µm and having 22,500 fine convex lenses arranged thereon was obtained. The above production process was repeated 30 times so as to prepare 30 planar microlens arrays.

The surface of the mold was examined under a microscope before and after its first use to check whether the mold releasing film came off the mold. As a result, the mold releasing film did not come off the mold at all. Further, in the above production process, removal of the mold from the sol-gel material could also be done easily and smoothly. In addition, the mold releasing film did not come off the mold at all even after the above production process was repeated 30 times, and releasability of the mold was not changed, either.

Further, in all the thirty planar microlens arrays, the hemispherical convex lenses formed on the planar microlens arrays each had a radius of curvature of about 110 µm and a focal distance of about 1,800 µm (wavelength: 1,550 nm). No difference was recognized among the thirty planar microlens arrays in terms of shape. Therefore, releasability and transferability of the mold were evaluated as "ⓞ" , a useful number of times of the mold was 30 times or more, and its overall evaluation was "ⓞ".

### Example 3

As shown in Fig. 14, a peripheral portion of a third mold base was hollowed out to a depth (h1) of 1 mm and a width (L1) of 5 mm as in Example 2, and a titanium foundation layer, a platinum protective layer and a gold mold releasing film were then formed on a surface of the mold base in the same manner as in Example 1. Unlike the first and second mold bases, the third mold base has pits of great depth, so that a necessary film thickness cannot be secured by only one level of hollow. To secure the necessary film thickness by only one level of hollow, a width L1 of solution film edge holding zone must be at least 15 mm. In this case, a very large amount of solution is required. Thus, to increase surface tension so as to secure a sufficient film thickness in a molded portion, another level of hollowing and coating of water-repellent agent were carried out. That is, a peripheral portion of the mold base which corresponded to a distance (L2) of 4 mm from the edges of the mold base was further hollowed to a depth (h2) of 0.5 mm, and a water-repellent agent (polydimethylsiloxane) was applied to the hollowed portion to a thickness of 500 nm so as to prepare a mold 29. In place of the above two-step hollowing, one-step hollowing (to a depth of h1 or h1 + h2) may be carried out, followed by application of the water-repellent agent. Thus, sol-gel material solution film edge holding zone 30 was formed around the perimeter of the mold 29, and the above titanium, platinum and gold films were coated on a mold surface 31 and a first vertical wall 32 and first bottom 33 of the solution film edge holding zone 30, while the above water-repellent layer was coated on a second vertical wall 34 and second bottom 35 of the solution film edge holding zone 30. Since the portion coated with the water-repellent agent was located at a peripheral portion, it had an effect of improving workability at the time of removing the mold.

As shown in Fig. 15, the mold surface 31 of the mold 29 was held horizontally. The same sol-gel solution as used in Example 2 was poured onto the surface of the mold such that film edges 37 reached a distance (s) of about 2 mm which was measured toward the center from a perimeter 38 of the solution film edge holding zone 30 beyond the perimeter of the mold surface 31 of the mold. Thus, a layer 36 having a thickness of about 200 µm was formed.

Then, after heat treatment was carried out in the same manner as in Example 2, a quartz glass plate 39 which was the same as that used in Example 2 was pressed against the layer 36, and press heating, removal of the mold and subsequent heating were carried out in the same manner as in Example 2 so as to obtain a planar microlens array having a film thickness in a flat area of about 50 µm and a maximum film thickness from the apex of a semicircular convex lens to the bottom of the plate of 170 µm and having 22,500 fine convex lenses arranged thereon. The above production process was repeated 30 times so as to prepare 30 planar microlens arrays.

The surface of the mold was examined under a microscope before and after its first use to check whether the mold releasing film came off the mold. As a result, the mold releasing film did not come off the mold at all. Further, in the above production process, removal of the mold from the sol-gel material could also be done easily and smoothly. In addition, the mold releasing film did not come off the mold at all even after the above production process was repeated 30 times, and releasability of the mold was not changed, either. No change in the effect of the water-repellent agent was seen even after the mold was used 30 times.

Further, in all the thirty planar microlens arrays, the hemispherical convex lenses formed on the planar microlens arrays each had a radius of curvature of about 110 µm and a focal distance of about 1,800 µm (wavelength: 1,550 nm). No difference was recognized among the thirty planar microlens arrays in terms of shape. Therefore, releasability and transferability of the mold were evaluated as "ⓞ" , a useful number of times of the mold was 30 times or more, and its overall evaluation was "ⓞ".

## Claims

1. A process for producing an article having a given surface pattern, the process comprising holding a mold horizontally with its mold surface facing up, feeding a sol-gel material solution onto the mold surface to form a film, heating them, bringing a substrate into contact with the film, heating them, removing the mold, and as required further heating the film and the substrate to obtain the article having a gelled film whose surface pattern is the inverse of a surface pattern of the mold surface of the mold coated on a surface of the substrate, wherein zone for holding edges of the film of the sol-gel material solution is provided along the perimeter of the mold surface of the mold at a lower position than the mold surface of the mold, and the sol-gel material solution is fed onto the mold surface of the mold such that the edges of the film of the sol-gel material solution reach the film edge holding zone beyond the perimeter of the mold surface of the mold.

2. The process of claim 1, wherein the zone has a depth of 1 to 5 mm and a width of 1 to 10 mm.

3. The process of claim 1 or 2, wherein the mold comprises a mold base at least a surface of which is made of at least one material selected from the group consisting of titanium (Ti), aluminum (Al), silicon (Si) and oxides thereof, an adhesion reinforcing layer composed of at least one metal selected from the group consisting of platinum (Pt), copper (Cu), palladium (Pd) and silver (Ag) by which the mold base is coated, and a mold releasing layer coating the adhesion reinforcing layer and composed of gold (Ag).
